(19) Europäisches Patentamt
European Patent Office
Office européen des brevets

(11) **EP 4 096 079 B1**

(12) **EUROPÄISCHE PATENTSCHRIFT**

(45) Veröffentlichungstag und Bekanntmachung des Hinweises auf die Patenterteilung:
**22.01.2025 Patentblatt 2025/04**

(21) Anmeldenummer: **22172947.8**

(22) Anmeldetag: **12.05.2022**

(51) Internationale Patentklassifikation (IPC):
**H02M 1/12** (2006.01)   **H02M 7/5387** (2007.01)
**H02M 7/5395** (2006.01)   **H02M 1/32** (2007.01)

(52) Gemeinsame Patentklassifikation (CPC):
**H02M 7/5387; H02M 1/126; H02M 1/325; H02M 7/5395**

(54) **ANORDNUNG ZUR FUNKTIONSPRÜFUNG VON KONDENSATOREN EINER FILTEREINRICHTUNG EINES FAHRZEUGS**

DEVICE FOR TESTING THE FUNCTION OF CONDENSERS OF A FILTER DEVICE OF A VEHICLE

AGENCEMENT D'ESSAI FONCTIONNEL DES CONDENSATEURS D'UN DISPOSITIF FILTRE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.05.2021 DE 102021205467**

(43) Veröffentlichungstag der Anmeldung:
**30.11.2022 Patentblatt 2022/48**

(73) Patentinhaber: **Siemens Mobility GmbH**
**81739 München (DE)**

(72) Erfinder:
• **Deumer, Heiko**
**47800 Krefeld (DE)**
• **Nevinskiy, Alexey**
**47829 Krefeld (DE)**

(74) Vertreter: **Siemens Patent Attorneys**
**Postfach 22 16 34**
**80506 München (DE)**

(56) Entgegenhaltungen:
**EP-A1- 2 919 024**      **EP-A1- 3 242 383**
**JP-A- 2010 233 425**

**Beschreibung**

Die Erfindung bezieht sich auf eine Anordnung für ein Fahrzeug, ein Fahrzeug, insbesondere ein Schienenfahrzeug, umfassend einen solche Anordnung sowie ein Verfahren zum Betreiben einer solchen Anordnung.

Im Bereich der Schienenfahrzeugtechnik werden Pulswechselrichter beispielsweise dazu eingesetzt, eine elektrische Schnittstelle zwischen einem Gleichspannungszwischenkreis und einem Wechselspannungssystem zu bilden, wobei das Wechselspannungssystem insbesondere ein Bordnetz des Fahrzeugs zur Versorgung von beispielsweise Hilfsbetrieben oder elektrischen Antriebskomponenten wie insbesondere Antriebsmotoren des Schienenfahrzeugs ist.

Pulswechselrichter arbeiten intern mit einer Taktfrequenz, die höher als die Sollfrequenz der auszugebenden Ausgangswechselspannungen ist. Auf Basis der internen Taktfrequenz werden beispielsweise Leistungshalbleiterschalter des Pulswechselrichters angesteuert. Aufgrund der Taktung des Schaltens dieser Leistungshalbleiterschalter kann sich die interne Taktfrequenz jedoch in den Ausgangswechselspannungen niederschlagen bzw. diese frequenzmäßig in einem unerwünschtem Ausmaße verunreinigen. Daher werden zwischen dem Pulswechselrichter und den von diesem gespeisten elektrischen Lasten üblicherweise Filtereinrichtungen geschaltet. Als Filtereinrichtungen können zum Beispiel sogenannte Sinusfilter, bestehend aus Sinusfilter-Induktivitäten und Sinusfilter-Kondensatoren, eingesetzt werden, die eine sinusförmige oder zumindest näherungsweise sinusförmige Ausgangswechselspannung für die angeschlossenen elektrischen Lasten bilden. Bei schnell taktenden Pulswechselrichtern werden im Allgemeinen Sinusfilter-Kondensatoren mit verhältnismäßig kleiner Kapazität angeschlossen.

Der Ausfall einer Filtereinrichtung bzw. eines Sinusfilter-Kondensators einer Filtereinrichtung kann in unterschiedlichen Ausprägungen erfolgen und nachteilig zu schweren Schäden in der gesamten elektrischen Anordnung führen. Zur Gewährleistung der korrekten Funktion einer Filtereinrichtung ist es daher wünschenswert, die Funktion dieser Kondensatoren zuverlässig diagnostizieren bzw. überwachen zu können.

Aus dem Dokument EP 2 919 024 A1 ist eine Anordnung zur Identifizierung eines Verschleißes von Kondensatoren eines zwischen einer Wechselspannungsquelle und einem Gleichrichter angeordneten Filters bekannt. Aus dem Dokument JP 2010 233425 A ist eine Einrichtung zur Ermittlung eines Verschleißes eines Spannungsdoppelungskondensators, welcher zwischen einem Gleichrichter und einem Gleichspannungszwischenkreis angeordnet ist, bekannt. Das Dokument EP 3 242 383 A1 offenbart schließlich ein Verfahren zur Überwachung einer Änderung der Kapazität eines Wechselstromfilters in einem elektrischen System, wobei der Filter zwischen einer Wechselspannungsquelle und einem Gleichrichter angeordnet ist.

Der Erfindung liegt die Aufgabe zugrunde, eine Anordnung anzugeben, mittels der etwaige Fehler in der Filtereinrichtung in einfacher Weise erkennbar sind.

Diese Aufgabe wird durch eine Anordnung, ein Fahrzeug sowie ein Verfahren mit den jeweiligen Merkmalen der unabhängigen Patentansprüche gelöst. Ausgestaltungen sind in jeweiligen abhängigen Patentansprüchen angegeben.

Ein erster Aspekt der Erfindung betrifft eine Anordnung für ein Fahrzeug, wobei die Anordnung einen mehrphasigen Pulswechselrichter, der auf Basis einer vorgegebenen internen Taktfrequenz arbeitet und im Betrieb aus einer an seiner Gleichspannungsseite, die mit einem Gleichspannungszwischenkreis verbunden ist, beaufschlagten Gleichspannung an seiner elektrischen Wechselspannungsseite je Phase eine Ausgangswechselspannung mit einer vorgegebenen Sollfrequenz für eine mit dem Pulswechselrichter verbundene mehrphasige elektrische Last erzeugt, und eine an die elektrische Wechselspannungsseite des Pulswechselrichters angeschlossene Filtereinrichtung umfasst, wobei die Filtereinrichtung zumindest einen Kondensator je Phase aufweist und ausgestaltet ist, die interne Taktfrequenz des Pulswechselrichters der jeweiligen Ausgangswechselspannung zu filtern, wodurch insbesondere die Einwirkung der Taktfrequenz auf die Ausgangswechselspannungen reduziert wird. Kennzeichnend umfasst die Anordnung ferner eine Kontrolleinrichtung, wobei die Kontrolleinrichtung ausgestaltet ist, für jede der Phasen einen strom- oder spannungsspezifischen Phasenwert zu bestimmen und anhand zumindest eines Phasendifferenzwerts, der eine strom- oder spannungsbezogene Phasendifferenz auf der Wechselspannungsseite des Pulswechselrichters anzeigt, eine korrekte Funktion der Kondensatoren der Filtereinrichtung zu bestimmen.

Ein Vorteil der erfindungsgemäßen Anordnung besteht darin, dass deren Kontrolleinrichtung einen Prüfbetrieb für die Filtereinrichtung ermöglicht. Die Überwachung beispielsweise der oben erwähnten Sinusfilter-Kondensatoren mit einer verhältnismäßig kleinen Kapazität basiert erfindungsgemäß auf einer Phasenprüfung, da eine solche einfach aber dennoch zuverlässig beispielsweise eine Veränderung der Kapazität der Sinusfilter-Kondensatoren anzeigen kann, gerade auch dann, wenn in einem Frühstadium eines auftretenden Fehlers sich dieser noch nicht prägnant in den Messsignalen offenbart.

Erfindungsgemäß erzeugt die Kontrolleinrichtung ein Fehlersignal, wenn der Phasendifferenzwert, zumindest einer der Phasendifferenzwerte oder eine vorgegebene Mindestzahl an Phasendifferenzwerten eine vorgegebene Auslösebedingung erfüllt.

Nach einer weiteren Weiterbildung der Anordnung bildet die Kontrolleinrichtung den oder zumindest einen der Phasendifferenzwerte vorzugsweise durch Bestimmung der Abweichung zwischen einem sich auf eine Phase beziehenden Phasenwert und einem anderen, sich auf eine andere Phase beziehenden Phasenwert. Ferner erzeugt die Kontrolleinrichtung ein Fehlersignal, wenn der in dieser Weise gebildete Phasendifferenzwert von einem vorgegebenen Sollphasenwert betragsmäßig über ein vorgegebenes Maß hinaus abweicht.

Einer weiteren Weiterbildung der Anordnung zufolge erzeugt, wenn die Wechselspannungsseite des Pulswechselrichters zumindest dreiphasig ist, die Kontrolleinrichtung ein Fehlersignal, wenn ein sich auf ein Phasenpaar beziehender Phasendifferenzwert von einem anderen sich auf ein anderes Phasenpaar beziehenden Phasendifferenzwert betragsmäßig über ein vorgegebenes Maß hinaus abweicht.

Erfindungsgemäß bildet die Kontrolleinrichtung den Phasendifferenzwert oder zumindest einen der Phasendifferenzwerte durch eine quantitative Ermittlung der Phasendifferenz zwischen dem Phasenstrom in einem der Phasenleiter auf der Wechselspannungsseite und dem Phasenstrom in einem anderen der Phasenleiter auf der Wechselspannungsseite.

Alternativ oder ergänzend bildet, wenn die Filtereinrichtung einen internen Sternpunkt aufweist, an den jeder der Phasenleiter unter Bildung des Sternpunkts angeschlossen ist, die Kontrolleinrichtung erfindungsgemäß den Phasendifferenzwert oder zumindest einen der Phasendifferenzwerte durch quantitative Ermittlung der Phasendifferenz zwischen einer Kondensatorspannung, die zwischen einem der Phasenleiter und dem Sternpunkt anliegt, und einer anderen Kondensatorspannung, die zwischen einem der anderen Phasenleiter und dem Sternpunkt anliegt.

Alternativ oder ergänzend weist die Filtereinrichtung einen internen potentialfreien Sternpunkt auf, an den jeder der Phasenleiter unter Bildung des Sternpunkts angeschlossen ist, und bildet die Kontrolleinrichtung erfindungsgemäß den Phasendifferenzwert oder zumindest einen der Phasendifferenzwerte durch quantitative Ermittlung der Phasendifferenz zwischen einem Kondensatorstrom, der zwischen einem der Phasenleiter und dem Sternpunkt fließt, und einem anderen Kondensatorstrom, der zwischen einem der anderen der Phasenleiter und dem Sternpunkt fließt.

Nach einer weiteren Weiterbildung umfasst die Anordnung ferner eine Schalteinrichtung, wobei die Schalteinrichtung in einer elektrischen Verbindung zwischen der Filtereinrichtung und der elektrischen Last angeordnet ist, und wobei die Schalteinrichtung ausgestaltet ist, die Last von dem Pulswechselrichter zu trennen.

Einer weiteren Weiterbildung der Anordnung zufolge bildet die Kontrolleinrichtung den oder die Phasendifferenzwerte in einem lastfreien Betrieb des Pulswechselrichters und/oder in einem Lastbetrieb des Pulswechselrichters.

Bei einer Funktionsprüfung bzw. Fehlererkennung in einem lastfreien Betrieb bzw. Leerlaufbetrieb ist die zumindest eine elektrische Last von der Filtereinrichtung und dem Pulswechselrichter getrennt. Alternativ oder zusätzlich kann die Fehlererkennung auch im Lastbetrieb durchgeführt werden, bei dem die zumindest eine Last mit der Filtereinrichtung und dem Pulswechselrichter elektrisch verbunden ist. Beispielsweise können die für die Fehlererkennung herangezogene Maximaldifferenzwerte an die jeweilige Betriebsart angepasst sein, für den Lastbetrieb somit andere Maximaldifferenzwerte gewählt werden als für den Leerlaufbetrieb. Beispielsweise können zudem solche

Maximaldifferenzwerte für den Lastbetrieb größer, insbesondere mindestens 10 % größer, als die Maximaldifferenzwerte für den Leerlaufbetrieb gewählt werden, um eine mögliche Verfälschung der Messergebnisse durch den Einfluss der Last bzw. Lasten zu berücksichtigen.

Nach einer weiteren Weiterbildung der Anordnung ist die Kontrolleinrichtung in eine Steuereinrichtung des Pulswechselrichters integriert. Dabei kann die Kontrolleinrichtung insbesondere durch ein in die Steuereinrichtung des Pulswechselrichters integriertes Softwareprogrammmodul gebildet sein. Eine solche Softwarelösung kann mit minimalen Zusatzkosten in bekannten Steuereinrichtungen, die zur Ansteuerung von Pulswechselrichtern geeignet sind, implementiert werden. Die Kontrolleinrichtung und die Steuereinrichtung können ferner als separate Komponenten, alternativ jedoch ebenso als pulswechselrichtereigene Komponenten des Pulswechselrichters ausgestaltet sein.

Die Ausgangsspannung des Pulswechselrichters weist an der elektrischen Wechselspannungsseite beispielsweise eine Sollfrequenz zwischen 1 und 100 Hz auf. Speziell kann die Sollfrequenz beispielsweise 50 oder 60 Hz betragen. Die Taktfrequenz des Pulswechselrichters ist beispielsweise mindestens zehnmal höher als die Lastfrequenz und liegt vorzugsweise in einem Bereich zwischen 1 kHz und 100 kHz.

Ein zweiter Aspekt der Erfindung betrifft ein Fahrzeug, das zumindest einen erfindungsgemäße Anordnung aufweist.

Nach einer Weiterbildung des Fahrzeugs weist dieses einen Gleichspannungszwischenkreis auf, der mit einer elektrischen Gleichspannungsseite des Pulswechselrichters verbunden ist, und ist als elektrische Last eine Antriebskomponente des Fahrzeugs oder ein Bordnetz des Fahrzeugs über den Pulswechselrichter mit elektrischer Energie speisbar.

Nach einer weiteren Weiterbildung des Fahrzeugs ist dieses als ein Schienenfahrzeug ausgestaltet. Ein solches Schienenfahrzeug ist dabei als eine Lokomotive oder als ein Triebzug, insbesondere für eine Fahrgastbeförderung im Nah-, Regional- oder Fernverkehr, ausgestaltet.

Ein dritter Aspekt der Erfindung betrifft ein Verfahren zum Betreiben einer Anordnung für ein Fahrzeug, wobei die Anordnung einen mehrphasigen Pulswechselrichter, der auf Basis einer vorgegebenen internen Taktfrequenz arbeitet und im Betrieb aus einer an seiner Gleichspannungsseite, die mit einem Gleichspannungszwischenkreis verbunden ist, beaufschlagten Gleichspannung an seiner elektrischen Wechselspannungsseite je Phase eine Ausgangswechselspannung mit einer vorgegebenen Sollfrequenz erzeugt, und eine an die elektrische Wechselspannungsseite des Pulswechselrichters angeschlossene Filtereinrichtung umfasst, wobei die Filtereinrichtung zumindest einen Kondensator je Phase aufweist und ausgestaltet ist, eine interne Taktfrequenz des Pulswechselrichters zu filtern. Gekennzeichnet ist das Verfahren dadurch, dass die Anordnung ferner eine Kontrolleinrichtung umfasst, wobei von der Kontrolleinrichtung für jede der Phasen ein strom- oder spannungsspezifischer Phasenwert bestimmt wird und anhand zumindest eines bestimmten Phasendifferenzwerts, der eine strom- oder spannungsbezogene Phasendifferenz auf der Wechselspannungsseite des Pulswechselrichters anzeigt, eine korrekte Funktion der Kondensatoren der Filtereinrichtung bestimmt wird, wobei von der Kontrolleinrichtung der Phasendifferenzwert oder zumindest einer der Phasendifferenzwerte gebildet wird durch eine quantitative Ermittlung der Phasendifferenz zwischen dem Phasenstrom in einem der Phasenleiter und dem Phasenstrom in einem anderen der Phasenleiter, und/oder einer Kondensatorspannung, die zwischen einem der Phasenleiter und einem internen Sternpunkt der Filtereinrichtung anliegt, und einer anderen Kondensatorspannung, die zwischen einem der anderen Phasenleiter und dem Sternpunkt anliegt, wobei jeder der Phasenleiter an den Sternpunkt angeschlossen ist, und/oder einem Kondensatorstrom, der zwischen einem der Phasenleiter und einem internen potentialfreien Sternpunkt der Filtereinrichtung fließt, und einem anderen Kondensatorstrom, der zwischen einem anderen der Phasenleiter und dem Sternpunkt fließt, wobei jeder der Phasenleiter an den Sternpunkt angeschlossen ist, und wobei von der Kontrolleinrichtung ein Fehlersignal erzeugt wird, wenn der Phasendifferenzwert, zumindest einer der Phasendifferenzwerte oder eine vorgegebene Mindestzahl an Phasendifferenzwerten eine vorgegebene Auslösebedingung erfüllt.

Einer Weiterbildung des Verfahrens zufolge umfasst die Anordnung ferner eine Schalteinrichtung, wobei die Schalteinrichtung in einer elektrischen Verbindung zwischen der Filtereinrichtung und der elektrischen Last angeordnet ist, und wobei die Schalteinrichtung ausgestaltet ist, die Last von dem Pulswechselrichter zu trennen, und von der Kontrolleinrichtung der oder die Phasendifferenzwerte in einem lastfreien Betrieb des Pulswechselrichters und/oder in einem Lastbetrieb des Pulswechselrichters gebildet werden.

Vorzugsweise wird die Prüfung der Funktion der Filtereinrichtung bzw. deren Kondensatoren so durchgeführt, wie dies vorstehend bezüglich der erfindungsgemäßen Kontrolleinrichtung beschrieben ist.

Die Erfindung wird nachfolgend anhand von Ausführungsbeispielen näher erläutert. Dabei zeigen beispielhaft:

Figur 1 ein Ausführungsbeispiel für ein Schienenfahrzeug, das mit einem Pulswechselrichter und einer Filtereinrichtung ausgestattet ist, wobei eine Überprüfung der Arbeitsweise der Filtereinrichtung anhand von phasenleiterstrombezogenen Phasendifferenzwerten erfolgt,

Figur 2 eine Ausführungsvariante des Ausführungsbeispiels gemäß Figur 1, bei der die Phasenströme im Pulswechselrichter gemessen werden,

Figur 3 ein Ausführungsbeispiel für ein Schienenfahrzeug, das mit einem Pulswechselrichter und einer Filtereinrichtung ausgestattet ist, wobei eine Überprüfung der Arbeitsweise der Filtereinrichtung anhand von kondensatorstrombezogenen Phasendifferenzwerten erfolgt,

Figur 4 ein Ausführungsbeispiel für ein Schienenfahrzeug, das mit einem Pulswechselrichter und einer Filtereinrichtung ausgestattet ist, wobei die Filtereinrichtung einen internen Sternpunkt aufweist und eine Überprüfung der Arbeitsweise der Filtereinrichtung anhand von kondensatorstrombezogenen Phasendifferenzwerten erfolgt, und

Figur 5 ein Ausführungsbeispiel für ein Schienenfahrzeug, das mit einem Pulswechselrichter und einer Filtereinrichtung mit internem Sternpunkt ausgestattet ist, wobei eine Überprüfung der Arbeitsweise der Filtereinrichtung anhand von kondensatorspannungsbezogenen Phasendifferenzwerten erfolgt.

In den Figuren werden der Übersicht halber für identische oder vergleichbare Komponenten dieselben Bezugszeichen verwendet.

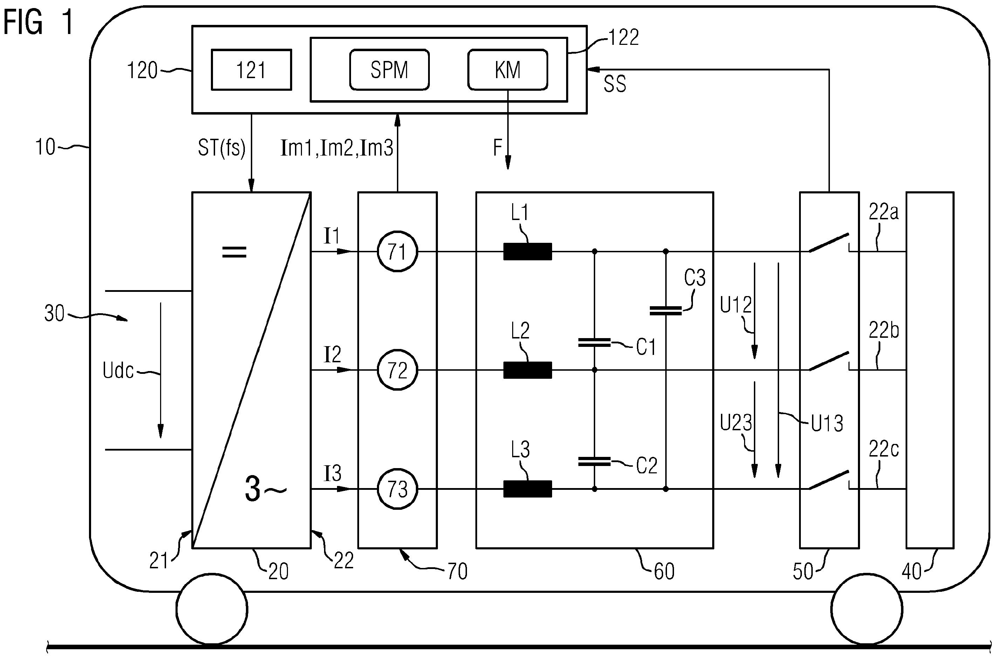

Die Figur 1 zeigt ein Ausführungsbeispiel für ein Schienenfahrzeug 10, das mit einem Pulswechselrichter 20 ausgestattet ist. Eine Gleichspannungsseite 21 des Pulswechselrichters 20 steht mit einem Gleichspannungszwischenkreis 30 des Schienenfahrzeugs 10 in Verbindung und ist mit einer Gleichspannung Udc beaufschlagt.

Eine Wechselspannungsseite 22 des Pulswechselrichters ist an ein dreiphasiges Wechselspannungssystem angeschlossen, das drei Phasenleiter 22a, 22b und 22c umfasst.

An die drei Phasenleiter 22a, 22b und 22c ist eine dreiphasige elektrische Last 40 angeschlossen, bei der es sich beispielsweise um ein internes Bordnetz des Schienenfahrzeugs 10 oder um eine oder mehrere Antriebskomponenten des Schienenfahrzeugs 10 handeln kann. Solche von dem Pulswechselrichter 20 gespeiste Antriebskomponenten sind beispielsweise ein oder mehrere Antriebsmotoren, insbesondere ein Drehstrom-Synchron- oder ein oder mehrere Drehstrom-Asynchronmotoren.

Zwischen die dreiphasige elektrische Last 40 und den Pulswechselrichter 20 sind eine Schalteinrichtung 50, eine Filtereinrichtung 60 und eine Strommesseinrichtung 70 geschaltet.

Bei dem Ausführungsbeispiel gemäß Figur 1 besteht die Filtereinrichtung 60 aus drei Kondensatoren C1, C2 und C3 sowie drei Induktivitäten L1, L2 und L3. Die Kondensatoren sind in einer Dreieck-Verschaltung verschaltet.

Bei dem Ausführungsbeispiel gemäß Figur 1 weist die Strommesseinrichtung 70 drei Messmodule 71, 72 und 73 auf, die dazu ausgelegt sind, die Phasenströme I1, I2 und I3 in den Phasenleitern 22a, 22b und 22c sowohl im Last- als auch im Leerlaufbetrieb des Pulswechselrichters 20 messen zu können. Die Figur 1 zeigt den Leerlaufbetrieb, da die Schalter der Schalteinrichtung 50 geöffnet sind.

Zur Ansteuerung des Pulswechselrichters 20 ist eine Steuereinrichtung 120 vorgesehen. Die Steuereinrichtung 120 umfasst eine Recheneinrichtung 121 und einen Speicher 122. In dem Speicher 122 ist ein Steuerprogrammmodul SPM abgespeichert, das bei Ausführung durch die Recheneinrichtung 121 die Arbeitsweise der Steuereinrichtung 120 vorgibt.

Die Steuereinrichtung 120 bzw. deren Steuerprogrammmodul SPM sind derart ausgestaltet, dass die Steuereinrichtung 120 den Pulswechselrichter 20 mit einem Steuersignal ST ansteuert, das die Sollfrequenz fs der Ausgangswechselspannungen U12, U23 und U13, die zwischen den Phasenleitern 22a, 22b und 22c anliegen bzw. anliegen sollen, einstellt. Die Sollfrequenz fs liegt vorzugsweise zwischen 1 und 100 Hz und beträgt beispielsweise 50 oder 60 Hz.

Die Filtereinrichtung 60 dient dazu, eine interne Taktfrequenz, mit der der Pulswechselrichter 20 arbeitet, zu dämpfen, damit die interne Taktfrequenz nicht oder nur möglichst wenig in den zwischen den Phasenleitern 22a, 22b und 22c anliegenden Ausgangswechselspannungen U12, U23 und U13 auftritt und damit möglichst wenig auf die dreiphasige elektrische Last 40 einwirkt. Die interne Taktfrequenz ist vorzugsweise in der Regel mindestens 10-mal höher als die Sollfrequenz und liegt beispielsweise in einem Bereich zwischen 1 kHz und 100 kHz.

In dem Speicher 122 der Steuereinrichtung 120 ist neben dem Steuerprogrammmodul SPM auch ein Kontrollmodul KM abgespeichert, das bei Ausführung durch die Recheneinrichtung 121 eine in der Steuereinrichtung 120 softwaremäßig integrierte Kontrolleinrichtung bildet.

Die Kontrolleinrichtung bzw. das Kontrollmodul KM empfängt von der Schalteinrichtung 50 vorzugsweise ein Stellsignal SS, das anzeigt, ob die Schalteinrichtung 50 geschlossen oder geöffnet ist.

Das Kontrollmodul KM wertet Strommesswerte Im1, Im2 und Im3 aus, die von Messmodulen 71, 72 und 73 erfasst werden. Die Messmodule 71, 72 und 73 messen bei dem Ausführungsbeispiel gemäß Figur 1 die Phasenströme I1, I2 und I3 in den Phasenleitern 22a, 22b und 22c.

Im Rahmen dieser Auswertung überprüft das Kontrollmodul KM, ob der Stromfluss auf der Wechselspannungsseite 22 des Pulswechselrichters 20 auf eine korrekte Arbeitsweise der Filtereinrichtung 60 hindeutet. Vorzugsweise prüft das Kontrollmodul KM, ob Phasendifferenzwerte, die bei dem Ausführungsbeispiel gemäß Figur 1 jeweils eine strombezogene Phasendifferenz zwischen zwei der Phasen auf der Wechselspannungsseite 22 des Pulswechselrichters 20 angeben, in einem vorgegebenen Sollbereich liegen:

$$|\Delta\varphi i12| - \varphi soll = |\varphi(Im1) - \varphi(Im2)| - \varphi soll \leq \Delta\varphi imax$$

$$|\Delta\varphi i13| - \varphi soll = |\varphi(Im1) - \varphi(Im3)| - \varphi soll \leq \Delta\varphi imax$$

$$|\Delta\varphi i23| - \varphi soll = |\varphi(Im2) - \varphi(Im3)| - \varphi soll \leq \Delta\varphi imax$$

wobei $\varphi(Im1)$ einen die Phase des ersten Phasenstroms I1 angebenden phasenleiterbezogenen Phasenwert, $\varphi(Im2)$ einen die Phase des zweiten Phasenstroms I2 angebenden phasenleiterbezogenen Phasenwert, $\varphi(Im3)$ einen die Phase des dritten Phasenstroms I3 angebenden phasenleiterbezogenen Phasenwert, $\Delta\varphi i12$ einen die Phasendifferenz zwischen dem ersten und zweiten Phasenstrom angebenden phasenleiterbezogenen Phasendifferenzwert, $\Delta\varphi i13$ einen die Phasendifferenz zwischen dem ersten und dritten Phasenstrom angebenden phasenleiterbezogenen Phasendifferenzwert, $\Delta\varphi i23$ einen die Phasendifferenz zwischen dem zweiten und dritten Phasenstrom angebenden phasenleiterbezogenen Phasendifferenzwert, $\Delta\varphi imax$ einen phasenleiterbezogenen Maximaldifferenzwert und $\varphi soll$ einen vorgegebenen Sollphasenwert bezeichnet.

Der Sollphasenwert ergibt sich vorzugsweise durch Division der maximal möglichen Phasendifferenz durch die Anzahl der Phasen auf der Wechselspannungsseite 22.

Im Falle einer Berechnung im Gradmaß ergibt sich also:

$$\varphi soll = 360° / AP$$

wobei AP die Anzahl der Phasen auf der Wechselspannungsseite 22 bezeichnet.

Im Falle einer Berechnung im Bogenmaß ergibt sich:

$$\varphi soll\ =\ 2\pi\ /\ AP$$

Bei einem dreiphasigen System beträgt der Sollphasenwert also 120° bzw. $2\pi/3$.

Weichen die Beträge der phasenleiterbezogenen Phasendifferenzwerte $\Delta\varphi 12$, $\Delta\varphi 13$ und $\Delta\varphi 23$ oder zumindest einer von ihnen vom Sollphasenwert $\varphi soll$ über das vom phasenleiterbezogenen Maximaldifferenzwert $\Delta\varphi imax$ definierte Maß ab, so wird dies als ein Indiz für einen Fehler angesehen und ein Fehlersignal F erzeugt, das einen möglichen Fehler der Filtereinrichtung 60 anzeigt und eine Wartung der Filtereinrichtung 60 auslöst. Zu große Abweichungen der Phasendifferenzwerte vom Sollphasenwert können beispielsweise auftreten, wenn ein Kurzschluss innerhalb zumindest eines der Kondensatoren auftritt oder einer der Kondensatoren von seinen zugeordneten Phasenleitern abgetrennt wurde.

Alternativ oder zusätzlich kann das Kontrollmodul KM ein Fehlersignal F erzeugen, wenn ein sich auf ein Phasenpaar beziehender Phasendifferenzwert von einem anderen sich auf ein anderes Phasenpaar beziehenden Phasendifferenzwert betragsmäßig über das vorgegebene Maß hinaus abweicht, also wenn alle oder zumindest eine der folgenden Bedingungen erfüllt sind:

$$|\Delta\varphi i12|\ -|\Delta\varphi i13|\ \geq\ \Delta\varphi imax2$$

$$|\Delta\varphi i12|\ -|\Delta\varphi i23|\ \geq\ \Delta\varphi imax2$$

$$|\Delta\varphi i13|\ -|\Delta\varphi i23|\ \geq\ \Delta\varphi imax2$$

wobei $\Delta\varphi imax2$ einen phasenpaarbezogenen Maximaldifferenzwert bezeichnet.

Bei dem Ausführungsbeispiel gemäß Figur 1 ist die Strommesseinrichtung 70 eine separate Komponente, die elektrisch zwischen den Pulswechselrichter 20 und die Filtereinrichtung 60 geschaltet ist und zum Messen der Phasenströme I1-I3 in den Phasenleitern 22a-22c sowohl im Lastbetrieb als auch im Leerlaufbetrieb dient bzw. geeignet ist.

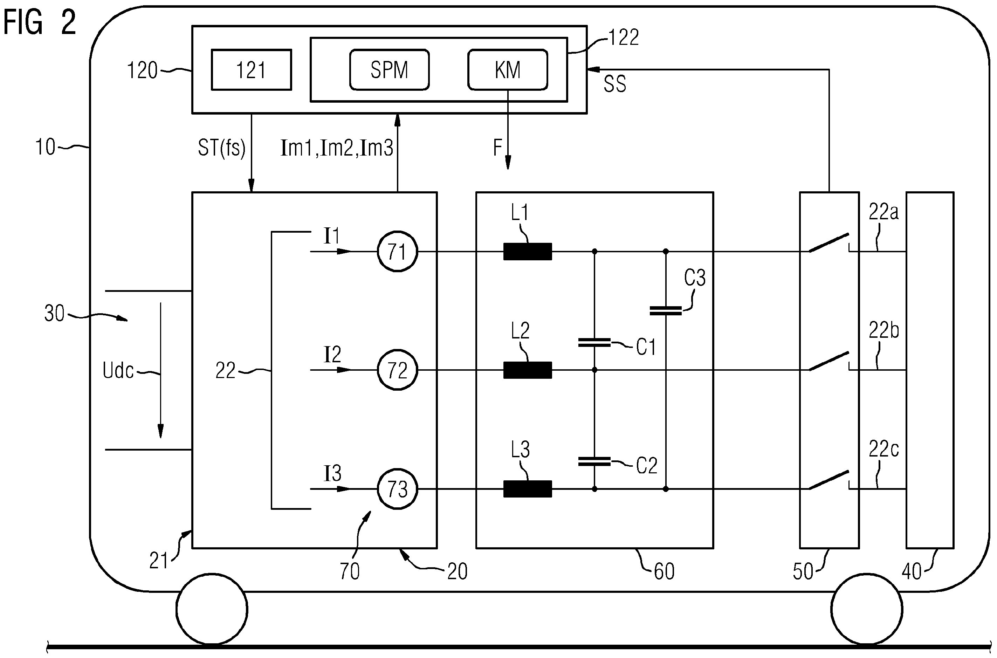

Alternativ ist es möglich, dass die Strommesseinrichtung 70 in dem Pulswechselrichter 20 integriert ist, also der Pulswechselrichter 20 die in den Phasenleitern 22a, 22b und 22c fließenden Ströme selbst erfasst und die entsprechenden Strommesswerte selbst an die Steuereinrichtung 120 übermittelt. Eine solche Ausgestaltung ist beispielhaft in der Figur 2 gezeigt.

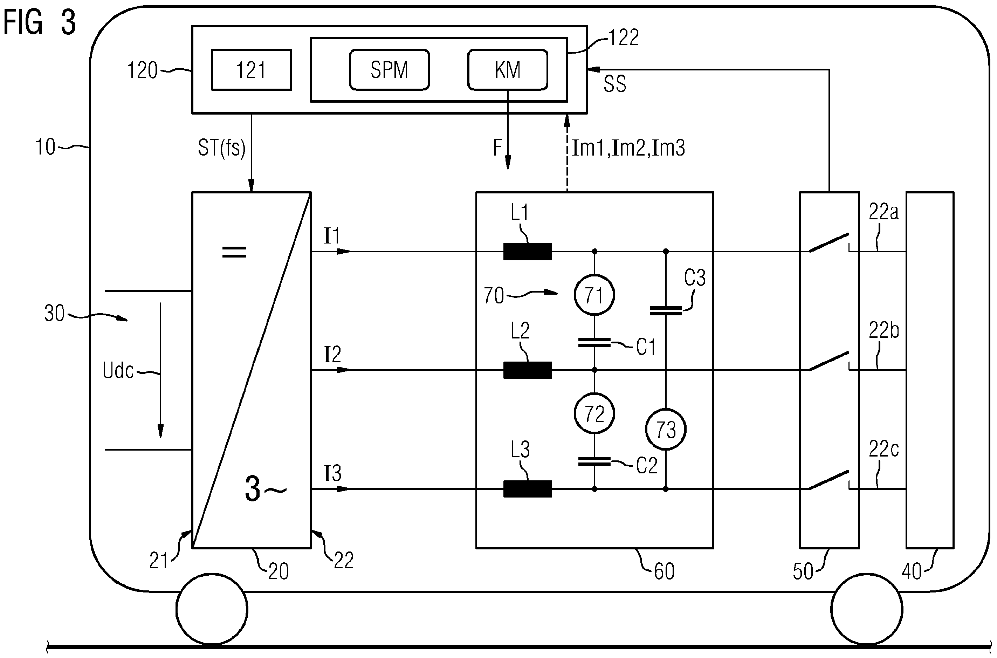

Alternativ können die Messmodule 71, 72 und 73 der Strommesseinrichtung 70 auch in der Filtereinrichtung 60 integriert sein, wie dies beispielhaft in der Figur 3 gezeigt ist. Die drei Messmodule 71, 72 und 73 stehen über nicht weiter gezeigte Verbindungsleitungen mit der Steuereinrichtung 120 bzw. dem Kontrollmodul KM in Verbindung, damit das Kontrollmodul KM eine Prüfung der Filtereinrichtung 60 vornehmen kann, wie dies oben beispielhaft im Zusammenhang mit den Figuren 1 und 2 erläutert worden ist.

Im Falle einer Integration der Strommesseinrichtung 70 bzw. deren Messmodule 71 bis 73 in der Filtereinrichtung 60 kann in vorteilhafter Weise erreicht werden, dass die durch die drei Kondensatoren C1, C2 und C3 fließenden Kondensatorströme direkt erfasst und ausgewertet werden können. Dies ermöglicht eine sehr genaue Messung der Kondensatorströme und eine gute Fehlerdetektion gerade bei diesen besonders relevanten Komponenten.

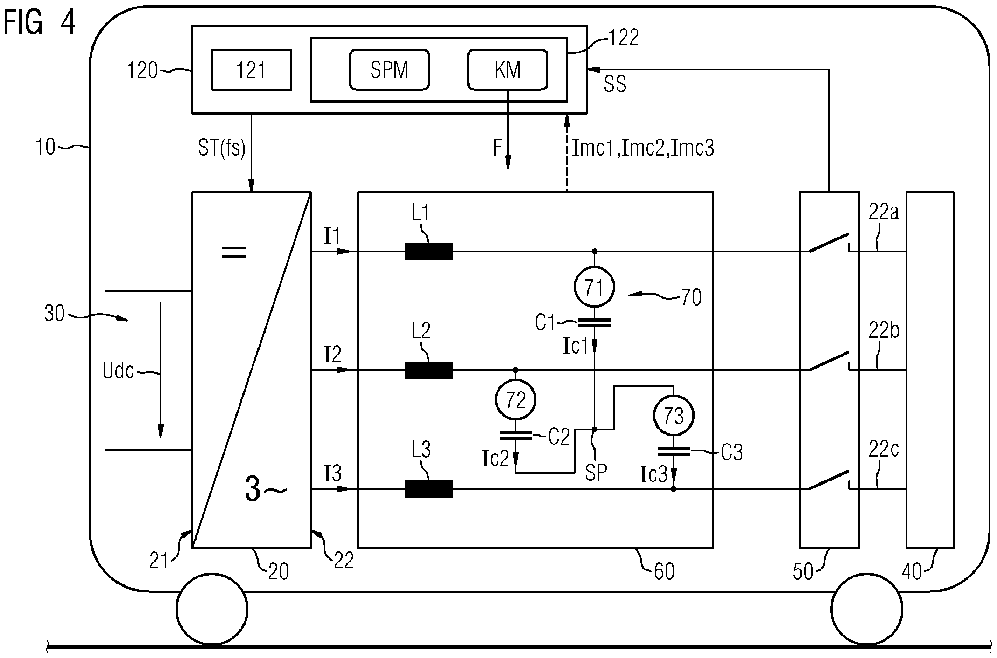

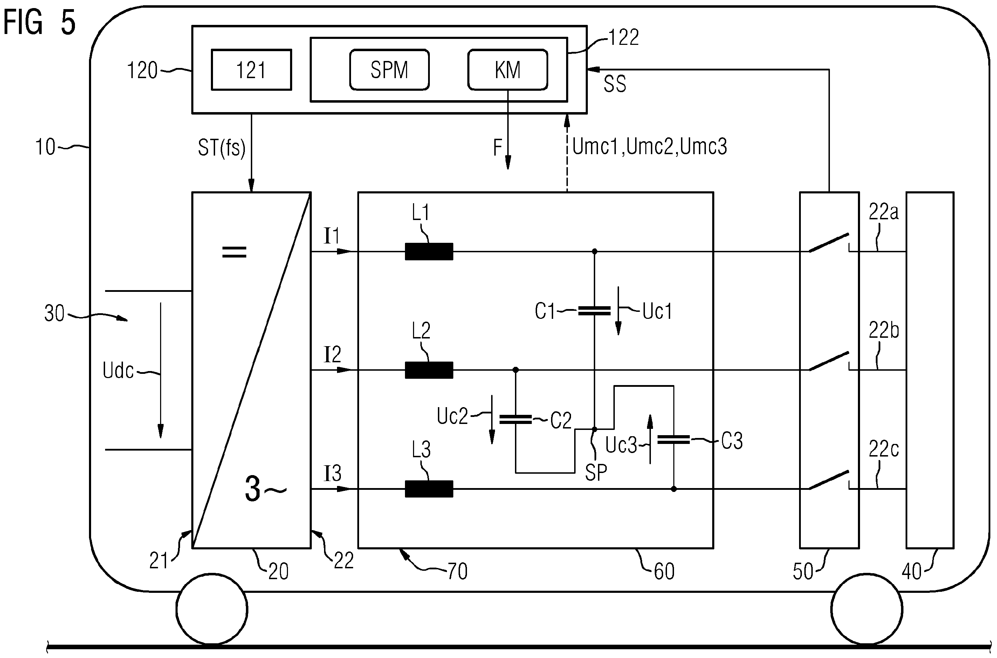

In den Figuren 1 bis 3 sind die Phasenleiter in der Filtereinrichtung 60 in einer Dreieckschaltung verschaltet. Alternativ können sie auch in einer Sternpunktschaltung mit potentialvariablem, also bezüglich des Potentials nicht festgelegtem, Sternpunkt SP verschaltet sein. Ausführungsbeispiele mit einer solchen Sternpunktschaltung zeigen beispielhaft die Figuren 4 und 5.

Bei dem Ausführungsbeispiel gemäß der Figur 4 misst das Kontrollmodul KM mit den Messmodulen 71, 72 und 73 die durch die Kondensatoren C1, C2 und C3 fließenden Kondensatorströme Ic1, Ic2 und Ic3 und wertet die Strommesswerte Imc1, Imc2 und Imc3 aus. Im Rahmen dieser Auswertung überprüft das Kontrollmodul KM, ob die Phasenlagen der Ströme auf eine korrekte Arbeitsweise der Filtereinrichtung 60 hindeuten.

Beispielsweise prüft das Kontrollmodul KM, ob Phasendifferenzwerte, die jeweils eine kondensatorstrombezogene Phasendifferenz zwischen den Kondensatorströmen anzeigen, in einem vorgegebenen Sollbereich liegen:

$$|\Delta\varphi ic12|\ -\ \varphi soll\ =\ |\varphi(Ic1)\ -\ \varphi(Ic2)|\ -\ \varphi soll\ \leq\ \Delta\varphi icmax$$

$$|\Delta\varphi ic13| - \varphi soll = |\varphi(Ic1) - \varphi(Ic3)| - \varphi soll \leq \Delta\varphi icmax$$

$$|\Delta\varphi ic23| - \varphi soll = |\varphi(Ic2) - \varphi(Ic3)| - \varphi soll \leq \Delta\varphi icmax$$

wobei $\varphi(Ic1)$ einen die Phase des ersten Kondensatorstromes Ic1 angebenden kondensatorstrombezogenen Phasenwert, $\varphi(Ic2)$ einen die Phase des zweiten Kondensatorstromes Ic2 angebenden kondensatorstrombezogenen Phasenwert, $\varphi(Ic3)$ einen die Phase des dritten Kondensatorstromes Ic3 angebenden kondensatorstrombezogenen Phasenwert, $\Delta\varphi ic12$ ein die Phasendifferenz zwischen dem ersten und zweiten Kondensatorstrom angebenden kondensatorstrombezogenen Phasendifferenzwert, $\Delta\varphi ic13$ einen die Phasendifferenz zwischen dem ersten und dritten Kondensatorstrom angebenden kondensatorstrombezogenen Phasendifferenzwert, $\Delta\varphi ic23$ einen die Phasendifferenz zwischen dem zweiten und dritten Kondensatorstrom angebenden kondensatorstrombezogenen Phasendifferenzwert und $\Delta\varphi icmax$ einen kondensatorstrombezogenen Maximaldifferenzwert bezeichnet.

Weichen die Beträge der kondensatorstrombezogenen Phasendifferenzwerte $\Delta\varphi ic12$, $\Delta\varphi ic13$ und $\Delta\varphi ic23$ oder zumindest einer von ihnen vom Sollphasenwert $\varphi soll$ über das vom kondensatorstrombezogenen Maximaldifferenzwert $\Delta\varphi icmax$ definierte Maß ab, so wird dies als ein Indiz für einen Fehler angesehen und ein Fehlersignal F erzeugt, das einen möglichen Fehler der Filtereinrichtung 60 anzeigt und eine Wartung der Filtereinrichtung 60 auslöst. Zu große Abweichungen der kondensatorstrombezogenen Phasendifferenzwerte vom Sollphasenwert können beispielsweise auftreten, wenn ein Kurzschluss innerhalb zumindest eines der Kondensatoren auftritt oder einer der Kondensatoren von seinen zugeordneten Phasenleitern abgetrennt wurde.

Alternativ oder zusätzlich kann das Kontrollmodul KM ein Fehlersignal F erzeugen, wenn ein sich auf ein Phasenpaar beziehender kondensatorstrombezogener Phasendifferenzwert von einem anderen sich auf ein anderes Phasenpaar beziehenden kondensatorstrombezogenen Phasendifferenzwert betragsmäßig über das vorgegebene Maß hinaus abweicht, also wenn alle oder zumindest eine der folgenden Bedingungen erfüllt sind:

$$|\Delta\varphi ic12| - |\Delta\varphi ic13| \geq \Delta\varphi icmax2$$

$$|\Delta\varphi ic12| - |\Delta\varphi ic23| \geq \Delta\varphi icmax2$$

$$|\Delta\varphi ic13| - |\Delta\varphi ic23| \geq \Delta\varphi icmax2$$

wobei $\Delta\varphi icmax2$ einen phasenpaar- und kondensatorstrombezogenen Maximaldifferenzwert bezeichnet.

Bei dem Ausführungsbeispiel gemäß der Figur 5 misst das Kontrollmodul KM mit nicht gezeigten Messmodulen die an den Kondensatoren C1, C2 und C3 anliegenden Kondensatorspannungen Uc1, Uc2 und Uc3 und wertet die Spannungsmesswerte Umc1, Umc2 und Umc3 aus. Im Rahmen dieser Auswertung überprüft das Kontrollmodul KM vorzugsweise, ob spannungsbezogene Phasendifferenzwerte, die jeweils eine spannungsbezogene

Phasendifferenz zwischen den Kondensatorspannungen anzeigen, in einem vorgegebenen Sollbereich liegen:

$$|\Delta\varphi uc12| - \varphi soll = |\varphi(Uc1) - \varphi(Uc2)| - \varphi soll \leq \Delta\varphi ucmax$$

$$|\Delta\varphi uc13| - \varphi soll = |\varphi(Uc1) - \varphi(Uc3)| - \varphi soll \leq \Delta\varphi ucmax$$

$$|\Delta\varphi uc23| - \varphi soll = |\varphi(Uc2) - \varphi(Uc3)| - \varphi soll \leq \Delta\varphi ucmax$$

wobei $\varphi(Uc1)$ einen die Phase der ersten Kondensatorspannung Uc1 angebenden spannungsbezogenen Phasenwert, $\varphi(Uc2)$ einen die Phase der zweiten Kondensatorspannung Uc2 angebenden spannungsbezogenen Phasenwert, $\varphi(Uc3)$ einen die Phase der dritten Kondensatorspannung Uc3 angebenden spannungsbezogenen Phasenwert, $\Delta\varphi uc12$ einen die Phasendifferenz zwischen der ersten und zweiten Kondensatorspannung angebenden spannungsbezogenen Phasendifferenzwert, $\Delta\varphi uc13$ einen die Phasendifferenz zwischen der ersten und dritten Kondensatorspannung angebenden spannungsbezogenen Phasendifferenzwert, $\Delta\varphi uc23$ einen die Phasendifferenz zwischen der zweiten und dritten Kondensatorspannung angebenden spannungsbezogenen Phasendifferenzwert und $\Delta\varphi ucmax$ einen spannungsbezogenen Maximaldifferenzwert bezeichnet.

Weichen die Beträge der spannungsbezogenen Phasendifferenzwerte $\Delta\varphi uc12$, $\Delta\varphi uc13$ und $\Delta\varphi uc23$ oder zumindest einer von ihnen vom Sollphasenwert $\varphi soll$ über das vom spannungsbezogenen Maximaldifferenzwert

$\Delta\varphi$ucmax definierte Maß ab, so wird dies als ein Indiz für einen Fehler angesehen und ein Fehlersignal F erzeugt, das einen möglichen Fehler der Filtereinrichtung 60 anzeigt und eine Wartung der Filtereinrichtung 60 auslöst. Zu große Abweichungen der spannungsbezogenen Phasendifferenzwerte vom Sollphasenwert können beispielsweise auftreten, wenn ein Kurzschluss innerhalb zumindest eines der Kondensatoren auftritt oder einer der Kondensatoren von seinen zugeordneten Phasenleitern abgetrennt wurde.

Alternativ oder zusätzlich kann das Kontrollmodul KM ein Fehlersignal F erzeugen, wenn ein sich auf ein Phasenpaar beziehender spannungsbezogener Phasendifferenzwert von einem anderen sich auf ein anderes Phasenpaar beziehender spannungsbezogener Phasendifferenzwert betragsmäßig über das vorgegebene Maß hinaus abweicht, also wenn alle oder zumindest eine der folgenden Bedingungen erfüllt sind:

$$|\Delta\varphi uc12| - |\Delta\varphi uc13| \geq \Delta\varphi ucmax2$$

$$|\Delta\varphi uc12| - |\Delta\varphi uc23| \geq \Delta\varphi ucmax2$$

$$|\Delta\varphi uc13| - |\Delta\varphi uc23| \geq \Delta\varphi ucmax2$$

wobei $\Delta\varphi$ucmax2 einen phasenpaar- und kondensatorspannungsbezogenen Maximaldifferenzwert bezeichnet.

In den Figuren 1 bis 5 sind beispielhaft 3AC-Systeme mit drei Phasenleitern ohne Nullleiter dargestellt und beschrieben. Die Ausführungen gelten für andere ein- oder mehrphasige AC-Systeme mit oder ohne Nulleiter entsprechend.

Im Zusammenhang mit den Figuren 1 bis 5 wurde die Phasenlagenprüfung zur Fehlererkennung beispielhaft für den Leerlaufbetrieb erläutert, bei dem die Last 40 von der Filtereinrichtung 60 und dem Pulswechselrichter 20 getrennt ist. Alternativ oder zusätzlich kann die Fehlerprüfung auch im Lastbetrieb durchgeführt werden, bei dem die Last 40 mit der Filtereinrichtung 60 und dem Pulswechselrichter 20 verbunden ist.

Im Leerlauf liegen der phasenleiterbezogene Maximaldifferenzwert $\Delta\varphi$imax, der kondensatorstrombezogene Maximaldifferenzwert $\Delta\varphi$icmax und der spannungsbezogene Maximaldifferenzwert $\Delta\varphi$ucmax vorzugsweise jeweils in einem Bereich zwischen 1° und 10°.

Vorteilhaft ist es, wenn der phasenleiterbezogene Maximaldifferenzwert $\Delta\varphi$imax, der kondensatorstrombezogene Maximaldifferenzwert $\Delta\varphi$icmax und der spannungsbezogene Maximaldifferenzwert $\Delta\varphi$ucmax an die jeweilige Betriebsart angepasst sind, also für den Lastbetrieb andere Maximaldifferenzwerte gewählt werden als für den Leerlaufbetrieb.

Vorteilhaft ist es, wenn die Maximaldifferenzwerte für den Lastbetrieb größer, vorzugsweise mindestens 10 % größer, als die Maximaldifferenzwerte für den Leerlaufbetrieb gewählt werden, um eine mögliche Verfälschung der Messergebnisse durch den Einfluss der Last 40 zu berücksichtigen.

| | |
|---|---|
| KM | Kontrollmodul / Kontrolleinrichtung |
| L1 | Induktivität |
| L2 | Induktivität |
| L3 | Induktivität |
| SP | Sternpunkt |
| SPM | Steuerprogrammmodul |
| SS | Stellsignal |
| ST | Steuersignal |
| U12 | Ausgangswechselspannung |
| U13 | Ausgangswechselspannung |
| U23 | Ausgangswechselspannung |
| Uc1 | Kondensatorspannung |
| Uc2 | Kondensatorspannung |
| Uc3 | Kondensatorspannung |
| Udc | Gleichspannung |
| Umc1 | Spannungsmesswert |
| Umc2 | Spannungsmesswert |
| Umc3 | Spannungsmesswert |

**Patentansprüche**

1. Anordnung für ein Fahrzeug (10), wobei die Anordnung umfasst:

    - einen mehrphasigen Pulswechselrichter (20), der dazu eingerichtet ist, auf Basis einer vorgegebenen internen Taktfrequenz zu arbeiten und dazu eingerichtet ist, im Betrieb aus einer an seiner Gleichspannungsseite, die mit einem Gleichspannungszwischenkreis (30) verbindbar ist, beaufschlagten Gleichspannung (Udc) an seiner elektrischen Wechselspannungsseite (22) je Phase eine Ausgangswechselspannung (U12, U23, U13) mit einer vorgegebenen Sollfrequenz (fs) für eine mit dem Pulswechselrichter (20) verbindbare mehrphasige elektrische Last (40) zu erzeugen, und
    - eine an die elektrische Wechselspannungsseite (22) des Pulswechselrichters (20) angeschlossene Filtereinrichtung (60), wobei die Filtereinrichtung (60) zumindest einen Kondensator (C1, C2, C3) je Phase aufweist und ausgestaltet ist, die interne Taktfrequenz des Pulswechselrichters (20) der jeweiligen Ausgangswechselspannung (U12, U23, U13) zu filtern,

    **dadurch gekennzeichnet, dass**

    - die Anordnung ferner eine Kontrolleinrichtung (KM) umfasst, wobei die Kontrolleinrichtung (KM) ausgestaltet ist, für jede der Phasen einen strom- oder spannungsspezifischen Phasenwert zu bestimmen und anhand zumindest eines Phasendifferenzwerts, der eine strom- oder spannungsbezogene Phasendifferenz auf der Wechselspannungsseite (22) des Pulswechselrichters (20) anzeigt, eine korrekte Funktion der Kondensatoren (C1, C2, C3) der Filtereinrichtung (60) zu bestimmen, wobei die Kontrolleinrichtung (KM) dazu eingerichtet ist, den Phasendifferenzwert oder zumindest einen der Phasendifferenzwerte zu bilden durch eine quantitative Ermittlung der Phasendifferenz zwischen
    - dem Phasenstrom in einem der Phasenleiter und dem Phasenstrom in einem anderen der Phasenleiter, und/oder
    - einer Kondensatorspannung, die zwischen einem der Phasenleiter und einem internen Sternpunkt der Filtereinrichtung (60) anliegt, und einer anderen Kondensatorspannung, die zwischen einem der anderen Phasenleiter und dem Sternpunkt anliegt, wobei jeder der Phasenleiter an den Sternpunkt angeschlossen ist, und/oder
    - einem Kondensatorstrom, der zwischen einem der Phasenleiter und einem internen potentialfreien Sternpunkt der Filtereinrichtung (60) fließt, und einem anderen Kondensatorstrom, der zwischen einem anderen der Phasenleiter und dem Sternpunkt fließt, wobei jeder der Phasenleiter an den Sternpunkt angeschlossen ist, und wobei die Kontrolleinrichtung (KM) dazu eingerichtet ist, ein Fehlersignal (F) zu erzeugen, wenn der Phasendifferenzwert, zumindest einer der Phasendifferenzwerte oder eine vorgegebene Mindestzahl an Phasendifferenzwerten eine vorgegebene Auslösebedingung erfüllt.

2. Anordnung nach Anspruch 1,
    **dadurch gekennzeichnet, dass**

    - die Kontrolleinrichtung (KM) dazu eingerichtet ist, den oder zumindest einen der Phasendifferenzwerte durch Bestimmung der Abweichung zwischen einem sich auf eine Phase beziehenden Phasenwert und einem anderen, sich auf eine andere Phase beziehenden Phasenwert zu bilden, und
    - die Kontrolleinrichtung (KM) dazu eingerichtet ist, ein Fehlersignal (F) zu erzeugen, wenn der in dieser Weise gebildete Phasendifferenzwert von einem Sollphasenwert betragsmäßig über ein vorgegebenes Maß hinaus abweicht.

3. Anordnung nach einem der voranstehenden Ansprüche,
    **dadurch gekennzeichnet, dass**

    - die Wechselspannungsseite (22) des Pulswechselrichters (20) zumindest dreiphasig ist, und
    - die Kontrolleinrichtung (KM) dazu eingerichtet ist, ein Fehlersignal (F) zu erzeugen, wenn ein sich auf ein Phasenpaar beziehender Phasendifferenzwert von einem anderen sich auf ein anderes Phasenpaar beziehenden Phasendifferenzwert betragsmäßig über ein vorgegebenes Maß hinaus abweicht.

4. Anordnung nach einem der voranstehenden Ansprüche,

    **dadurch gekennzeichnet, dass** die Anordnung ferner eine Schalteinrichtung (50) und eine Last (40) umfasst,

wobei die Schalteinrichtung (50) in einer elektrischen Verbindung zwischen der Filtereinrichtung (60) und der elektrischen Last (40) angeordnet ist, und wobei die Schalteinrichtung (50) ausgestaltet ist, die Last (40) von dem Pulswechselrichter (20) zu trennen.

5. Anordnung nach einem der voranstehenden Ansprüche, **dadurch gekennzeichnet, dass** die Kontrolleinrichtung (KM) dazu eingerichtet ist, den oder die Phasendifferenzwerte in einem lastfreien Betrieb des Pulswechselrichters (20) und/oder in einem Lastbetrieb des Pulswechselrichters (20) zu bilden.

6. Anordnung nach einem der voranstehenden Ansprüche, **dadurch gekennzeichnet, dass** die Kontrolleinrichtung (KM) in eine Steuereinrichtung (120) des Pulswechselrichters (20) integriert ist.

7. Fahrzeug (10),
**dadurch gekennzeichnet, dass** es eine Anordnung nach einem der Ansprüche 1 bis 6 aufweist.

8. Fahrzeug (10) nach Anspruch 7,
**dadurch gekennzeichnet, dass** es einen Gleichspannungszwischenkreis (30) umfasst, wobei

- der Gleichspannungszwischenkreis (30) mit einer elektrischen Gleichspannungsseite (21) des Pulswechselrichters (20) verbunden ist, und
- als elektrische Last (40) eine Antriebskomponente des Fahrzeugs (10) oder ein Bordnetz des Fahrzeugs (10) von dem Gleichspannungszwischenkreis (30) über den Pulswechselrichter (20) mit elektrischer Energie speisbar ist.

9. Fahrzeug (10) nach Anspruch 7 oder 8,
**dadurch gekennzeichnet, dass** es als ein Schienenfahrzeug ausgestaltet ist.

10. Verfahren zum Betreiben einer Anordnung für ein Fahrzeug (10), wobei die Anordnung einen mehrphasigen Pulswechselrichter (20), der auf Basis einer vorgegebenen internen Taktfrequenz arbeitet und im Betrieb aus einer an seiner Gleichspannungsseite, die mit einem Gleichspannungszwischenkreis (30) verbunden ist, beaufschlagten Gleichspannung (Udc) an seiner elektrischen Wechselspannungsseite (22) je Phase eine Ausgangswechselspannung (U12, U23, U13) mit einer vorgegebenen Sollfrequenz erzeugt, und eine an die elektrische Wechselspannungsseite (22) des Pulswechselrichters (20) angeschlossene Filtereinrichtung (60) umfasst, wobei die Filtereinrichtung (60) zumindest einen Kondensator (C1, C2, C3) je Phase aufweist und ausgestaltet ist, eine interne Taktfrequenz des Pulswechselrichters (20) zu filtern,

**dadurch gekennzeichnet, dass** die Anordnung ferner eine Kontrolleinrichtung (KM) umfasst, wobei von der Kontrolleinrichtung (KM) für jede der Phasen ein strom- oder spannungsspezifischer Phasenwert bestimmt wird und anhand zumindest eines bestimmten Phasendifferenzwerts, der eine strom- oder spannungsbezogene Phasendifferenz auf der Wechselspannungsseite (22) des Pulswechselrichters (20) anzeigt, eine korrekte Funktion der Kondensatoren (C1, C2, C3) der Filtereinrichtung (60) bestimmt wird,
wobei von der Kontrolleinrichtung (EM) der Phasendifferenzwert oder zumindest einer der Phasendifferenzwerte gebildet wird durch eine quantitative Ermittlung der Phasendifferenz zwischen

- dem Phasenstrom in einem der Phasenleiter und dem Phasenstrom in einem anderen der Phasenleiter, und/oder
- einer Kondensatorspannung, die zwischen einem der Phasenleiter und einem internen Sternpunkt der Filtereinrichtung (60) anliegt, und einer anderen Kondensatorspannung, die zwischen einem der anderen Phasenleiter und dem Sternpunkt anliegt, wobei jeder der Phasenleiter an den Sternpunkt angeschlossen ist, und/oder
- einem Kondensatorstrom, der zwischen einem der Phasenleiter und einem internen potentialfreien Sternpunkt der Filtereinrichtung (60) fließt, und einem anderen Kondensatorstrom, der zwischen einem anderen der Phasenleiter und dem Sternpunkt fließt, wobei jeder der Phasenleiter an den Sternpunkt angeschlossen ist,

und wobei von der Kontrolleinrichtung (EM) ein Fehlersignal (F) erzeugt wird, wenn der Phasendifferenzwert, zumindest einer der Phasendifferenzwerte oder eine vorgegebene Mindestzahl an Phasendifferenzwerten eine vorgegebene Auslösebedingung erfüllt.

**11.** Verfahren nach Anspruch 10,
**dadurch gekennzeichnet, dass**

- die Anordnung ferner eine Schalteinrichtung (50) umfasst, wobei die Schalteinrichtung (50) in einer elektrischen Verbindung zwischen der Filtereinrichtung (60) und der elektrischen Last (40) angeordnet ist, und wobei die Schalteinrichtung (50) ausgestaltet ist, die Last (40) von dem Pulswechselrichter (20) zu trennen, und
- von der Kontrolleinrichtung (KM) der oder die Phasendifferenzwerte in einem lastfreien Betrieb des Pulswechselrichters (20) und/oder in einem Lastbetrieb des Pulswechselrichters (20) gebildet werden.

**Claims**

**1.** Arrangement for a vehicle (10), wherein the arrangement comprises:

- a multiphase pulse width modulated inverter (20), which is configured to operated on the basis of a predefined internal clock frequency and is configured, during operation, to generate, from a DC voltage (Udc) which is applied to its DC voltage side that can be connected to a DC intermediate circuit (30), on its electrical AC voltage side (22) for each phase, an output AC voltage (U12, U23, U13) with a predefined setpoint frequency (fs) for a multiphase electrical load (40) that can be connected to the pulse width modulated inverter (20), and
- a filter facility (60) connected to the electrical AC voltage side (22) of the pulse width modulated inverter (20), wherein the filter facility (60) has at least one capacitor (C1, C2, C3) for each phase and is embodied to filter the internal clock frequency of the pulse width modulated inverter (20) for the respective output AC voltage (U12, U23, U13),

**characterised in that**

- the arrangement further comprises a monitoring facility (KM), wherein the monitoring facility (KM) is embodied to determine a current- or voltage-specific phase value for each of the phases and to determine a correct function of the capacitors (C1, C2, C3) of the filter facility (60) on the basis of at least one phase difference value that indicates a current- or voltage-related phase difference on the AC voltage side (22) of the pulse width modulated inverter (20),
wherein the monitoring facility (KM) is configured to form the phase difference value or at least one of the phase difference values by way of a quantitative ascertaining of the phase difference between

- the phase current in one of the phase conductors and the phase current in another of the phase conductors, and/or
- a capacitor voltage, which is applied between one of the phase conductors and an internal neutral point of the filter facility (60), and another capacitor voltage, which is applied between one of the other phase conductors and the neutral point, wherein each of the phase conductors is connected to the neutral point, and/or
- a capacitor current, which flows between one of the phase conductors and an internal potential-free neutral point of the filter facility (60), and another capacitor current, which flows between another of the phase conductors and the neutral point, wherein each of the phase conductors is connected to the neutral point,

and wherein the monitoring facility (KM) is configured to generate an error signal (F) when the phase difference value, at least one of the phase difference values or a predefined minimum number of phase difference values meets a predefined trigger condition.

**2.** Arrangement according to claim 1,
**characterised in that**

- the monitoring facility (KM) is configured to form the or at least one of the phase difference values by determining the deviation between a phase value relating to a phase and another phase value relating to another phase, and
- the monitoring facility (KM) is configured to generate an error signal (F) when the phase difference value formed in this manner deviates in amount from a setpoint phase value beyond a predefined measure.

**3.** Arrangement according to one of the preceding claims,
**characterised in that**

- the AC voltage side (22) of the pulse width modulated inverter (20) has at least three phases, and
- the monitoring facility (KM) is configured to generate an error signal (F) when a phase difference value relating to a phase pair deviates in amount from another phase difference value relating to another phase pair beyond a predefined measure.

4. Arrangement according to one of the preceding claims, **characterised in that**
the arrangement further comprises a switching facility (50) and a load (40), wherein the switching facility (50) is arranged in an electrical connection between the filter facility (60) and the electrical load (40), and wherein the switching facility (50) is embodied to disconnect the load (40) from the pulse width modulated inverter (20).

5. Arrangement according to one of the preceding claims, **characterised in that**
the monitoring facility (KM) is configured to form the phase difference value or values in a load-free operation of the pulse width modulated inverter (20) and/or in a load operation of the pulse width modulated inverter (20).

6. Arrangement according to one of the preceding claims, **characterised in that**
the monitoring facility (KM) is integrated into a control facility (120) of the pulse width modulated inverter (20).

7. Vehicle (10), **characterised in that**
it has an arrangement according to one of claims 1 to 6.

8. Vehicle (10) according to claim 7,
**characterised in that** it comprises a DC intermediate circuit (30), wherein

- the DC intermediate circuit (30) is connected to an electrical DC voltage side (21) of the pulse width modulated inverter (20), and
- as electrical load (40), a drive component of the vehicle (10) or an on-board network of the vehicle (10) can be supplied with electrical energy by the DC intermediate circuit (30) via the pulse width modulated inverter (20).

9. Vehicle (10) according to claim 7 or 8, **characterised in that**
it is embodied as a rail vehicle.

10. Method for operating an arrangement for a vehicle (10), wherein the arrangement comprises a multiphase pulse width modulated inverter (20), which operates on the basis of a predefined internal clock frequency and, during operation, generates, from a DC voltage (Udc) which is applied to its DC voltage side that is connected to a DC intermediate circuit (30), on its electrical AC voltage side (22) for each phase, an output AC voltage (U12, U23, U13) with a predefined setpoint frequency, and a filter facility (60) connected to the electrical AC voltage side (22) of the pulse width modulated inverter (20), wherein the filter facility (60) has at least one capacitor (C1, C2, C3) for each phase and is embodied to filter an internal clock frequency of the pulse width modulated inverter (20),
**characterised in that**

the arrangement further comprises a monitoring facility (KM),
wherein by way of the monitoring facility (KM) a current- or voltage-specific phase value is determined for each of the phases and a correct function of the capacitors (C1, C2, C3) of the filter facility (60) is determined on the basis of at least one determined phase difference value that indicates a current- or voltage-related phase difference on the AC voltage side (22) of the pulse width modulated inverter (20),
wherein the phase difference value or at least one of the phase difference values is formed by the monitoring facility (KM) by way of a quantitative ascertaining of the phase difference between

- the phase current in one of the phase conductors and the phase current in another of the phase conductors, and/or
- a capacitor voltage, which is applied between one of the phase conductors and an internal neutral point of the filter facility (60), and another capacitor voltage, which is applied between one of the other phase conductors and the neutral point, wherein each of the phase conductors is connected to the neutral point, and/or
- a capacitor current, which flows between one of the phase conductors and an internal potential-free neutral point of the filter facility (60), and another capacitor current, which flows between another of the phase conductors and the neutral point, wherein each of the phase conductors is connected to the neutral point,

and wherein the monitoring facility (KM) is configured to generate an error signal (F) when the phase difference value, at least one of the phase difference values or a predefined minimum number of phase difference values meets a predefined trigger condition.

**11.** Method according to claim 10,
**characterised in that**

- the arrangement further comprises a switching facility (50), wherein the switching facility (50) is arranged in an electrical connection between the filter facility (60) and the electrical load (40), and wherein the switching facility (50) is embodied to disconnect the load (40) from the pulse width modulated inverter (20), and
- the phase difference value or values are formed by way of the monitoring facility (KM) in a load-free operation of the pulse width modulated inverter (20) and/or in a load operation of the pulse width modulated inverter (20).

**Revendications**

**1.** Agencement pour un véhicule (10), dans lequel l'agencement comprend :

- un onduleur (20) à impulsions polyphasé, qui est agencé pour travailler sur la base d'une fréquence d'horloge interne donnée à l'avance et qui est agencé pour produire, en fonctionnement, à partir d'une tension (Udc) continue appliquée à son côté de tension continue, qui peut être connecté à un circuit (30) intermédiaire à tension continue, sur son côté (22) de tension alternative électrique, respectivement une phase d'une tension (U12, U23, U13) alternative de sortie ayant une fréquence (fs) de consigne donnée à l'avance pour une charge (40) électrique polyphasée pouvant être connectée à l'onduleur (20) à impulsions, et
- un dispositif (60) de filtrage, raccordé au côté (22) de tension alternative électrique de l'onduleur (20) à impulsions, dans lequel le dispositif (60) de filtrage a au moins un condensateur (C1, C2, C3) pour chaque phase et est conformé pour filtrer la fréquence d'horloge interne de l'onduleur (20) à impulsions à la tension (U12, U23, U13) alternative de sortie respective,

**caractérisé en ce que**

- l'agencement comprend en outre un dispositif (KM) de contrôle, dans lequel l'agencement (KM) de contrôle est conformé pour déterminer, pour chacune des phases, une valeur de phase spécifique au courant ou à la tension et pour, à l'aide d'au moins une valeur de différence de phase, qui indique une différence de phase rapportée au courant ou à la tension du côté (22) de la tension alternative de l'onduleur (20) à impulsions, déterminer le fonctionnement correct des condensateurs (C1, C2, C3) du dispositif (60) de filtrage, dans lequel le dispositif (KM) de contrôle est agencé pour former la valeur de différence de phase ou au moins l'une des valeurs de différence de phase par une détermination quantitative de la différence de phase entre

- le courant de phase dans l'un des conducteurs de phase et le courant de phase dans un autre des conducteurs de phase, et/ou
- une tension de condensateur, qui s'applique entre l'un des conducteurs de phase et un point neutre interne du dispositif (60) de filtrage et une autre tension de condensateur, qui s'applique entre l'un des autres conducteurs de phase et le point neutre, dans lequel chacun des conducteurs de phase est raccordé au point neutre, et/ou
- un courant de condensateur, qui passe entre l'un des conducteurs de phase et un point neutre interne sans potentiel du dispositif (60) de filtrage et un autre courant de condensateur, qui passe entre un autre des conducteurs de phase et le point neutre, dans lequel chacun des conducteurs de phase est raccordé au point neutre,

et dans lequel le dispositif (KM) de contrôle est agencé pour produire un signal (F) de défaut, si la valeur de la différence de phase, au moins l'une des valeurs de différence de phase ou un nombre minimum donné à l'avance de valeurs de différence de phase, satisfait une condition de déclenchement donnée à l'avance.

**2.** Agencement suivant la revendication 1,
**caractérisé en ce que**

- le dispositif (KM) de contrôle est agencé pour former la ou au moins l'une des valeurs de différence de phase, en déterminant l'écart entre une valeur de phase se rapportant à une phase et une autre valeur de phase se rapportant à une autre phase, et
- le dispositif (KM) de contrôle est agencé pour produire un signal (F) de défaut, si la valeur de différence de phase ainsi formée s'écarte d'une valeur de phase de consigne en valeur absolue au-delà d'une mesure donnée à l'avance.

3. Agencement suivant l'une des revendications précédentes, **caractérisé en ce que**

- le côté (22) de tension alternative de l'onduleur (20) à impulsions est au moins triphasé, et
- le dispositif (KM) de contrôle est agencé pour produire un signal (F) de défaut, si une valeur de différence de phase se rapportant à une paire de phases s'écarte d'une autre valeur de différence de phase se rapportant à une autre paire de phases en valeur absolue au-delà d'une mesure donnée à l'avance.

4. Agencement suivant l'une des revendications précédentes, **caractérisé en ce que**

l'agencement comprend en outre un dispositif (50) de coupure et une charge (40),
dans lequel le dispositif (50) de coupure est monté dans une liaison électrique entre le dispositif (60) de filtrage et la charge (40), et dans lequel le dispositif (50) de coupure est conformé pour séparer la charge (40) de l'onduleur (20) à impulsions.

5. Agencement suivant l'une des revendications précédentes, **caractérisé en ce que**
le dispositif (KM) de contrôle est agencé pour former la ou les valeurs de différence de phase dans un fonctionnement sans charge de l'onduleur (20) à impulsions et/ou dans un fonctionnement en charge de l'onduleur (20) à impulsions.

6. Agencement suivant l'une des revendications précédentes, **caractérisé en ce que**
le dispositif (KM) de commande est intégré dans un dispositif (120) de commande de l'onduleur (20) à impulsions.

7. Véhicule (10),
**caractérisé en ce qu'**
il comporte un agencement suivant l'une des revendications 1 à 6.

8. Véhicule (10) suivant la revendication 7,
**caractérisé en ce qu'**
il comprend un circuit (30) intermédiaire à tension continue, dans lequel

- le circuit (30) intermédiaire à tension continue est connecté à un côté (21) de tension continue électrique de l'onduleur (20) à impulsions, et
- comme charge (40) électrique, un composant d'entraînement du véhicule (10) ou un réseau de bord du véhicule (10) peut être alimenté en énergie électrique par le circuit (30) intermédiaire à tension continue en passant par l'onduleur (20) à impulsions.

9. Véhicule (10) suivant la revendication 7 ou 8,
**caractérisé en ce qu'**
il est conformé en véhicule ferroviaire.

10. Procédé pour faire fonctionner un agencement pour un véhicule (10) ferroviaire, dans lequel l'agencement comprend un onduleur (20) à impulsions polyphasé, qui travaille sur la base d'une fréquence d'horloge interne donnée à l'avance et qui produit, en fonctionnement, à partir d'une tension (Udc) continue appliquée à son côté (22) de tension continue, qui est connecté à un circuit (30) intermédiaire de tension continue par phase, une tension (U12, U23, U13) alternative de sortie ayant une fréquence de consigne donnée à l'avance, et un dispositif (60) de filtrage raccordé au côté (22) de tension alternative électrique de l'onduleur (20) à impulsions, dans lequel le dispositif (60) de filtrage a au moins un condensateur (C1, C2, C3) pour chaque phase et est conformé pour filtrer une fréquence d'horloge interne de l'onduleur (20) à impulsions,
**caractérisé en ce que**

l'agencement comprend en outre un dispositif (KM) de contrôle, dans lequel, par le dispositif (KM) de contrôle, on détermine, pour chacune des phases, une valeur de phase spécifique au courant ou à la tension et, à l'aide d'au moins une valeur de différence de phase, qui indique une différence de phase rapportée au courant ou à la tension du côté (22) de la tension alternative de l'onduleur (20) à impulsions, on détermine un fonctionnement correct des condensateurs (C1, C2, C3) du dispositif (60) de filtrage,

dans lequel on forme, par le dispositif (EM) de contrôle, la valeur de différence de phase ou au moins l'une des valeurs de différence de phase, par une détermination quantitative de la différence de phase entre

- le courant de phase dans l'un des conducteurs de phase et le courant de phase dans un autre des conducteurs de phase, et/ou
- une tension de condensateur, qui s'applique entre l'un des conducteurs de phase et un point neutre interne du dispositif (60) de filtrage et une autre tension de condensateur, qui s'applique entre l'un des autres conducteurs de phase et le point neutre, dans lequel chacun des conducteurs de phase est raccordé au point neutre, et/ou
- un courant de condensateur, qui passe entre l'un des conducteurs de phase et un point neutre interne sans potentiel du dispositif (60) de filtrage et un autre courant de condensateur, qui passe entre un autre des conducteurs de phase et le point neutre, dans lequel chacun des conducteurs de phase est raccordé au point neutre,

et dans lequel on produit, par le dispositif (EM) de contrôle, un signal (F) de défaut, si la valeur de la différence de phase, au moins l'une des valeurs de différence de phase ou un nombre minimum donné à l'avance de valeurs de différence de phase, satisfait une condition de déclenchement donnée à l'avance.

11. Procédé suivant la revendication 10,
   **caractérisé en ce que**

   - l'agencement comprend en outre un dispositif (50) de coupure, dans lequel le dispositif (50) de coupure est monté dans une liaison électrique entre le dispositif (60) de filtrage et la charge (40) électrique, et dans lequel le dispositif (50) de coupure est conformé pour séparer la charge (40) de l'onduleur (20) à impulsions, et
   - l'on forme, par le dispositif (KM) de contrôle, la ou les valeurs de différence de phase dans un fonctionnement sans charge de l'onduleur (20) à impulsions et/ou dans un fonctionnement en charge de l'onduleur (20) à impulsions.

FIG 1

FIG 2

EP 4 096 079 B1

FIG 3

EP 4 096 079 B1

FIG 4

EP 4 096 079 B1

FIG 5

**IN DER BESCHREIBUNG AUFGEFÜHRTE DOKUMENTE**

**In der Beschreibung aufgeführte Patentdokumente**

- EP 2919024 A1
- JP 2010233425 A
- EP 3242383 A1